# EUROPÄISCHE PATENTSCHRIFT

(11) **EP 3 590 634 B1**
(45) Veröffentlichungstag und Bekanntmachung des Hinweises auf die Patenterteilung: **30.06.2021**
(21) Anmeldenummer: 19191715.2
(22) Anmeldetag: 22.08.2012
(51) Int. Cl.: B22F 9/08

(54) **OBERFLÄCHENPASSIVIERUNG VON ALUMINIUMHALTIGEM PULVER**
SURFACE PASSIVATION OF ALUMINUM CONTAINING POWDER
PASSIVATION DE SURFACE DU POUDRE CONTENANT DE L'ALUMINIUM

(30) Priorität: 29.08.2011 DE 102011111365
(43) Veröffentlichungstag der Anmeldung: 08.01.2020
(62) Teilanmeldung aus: 12772199.1
(73) Patentinhaber: Airbus Defence and Space GmbH, 82024 Taufkirchen (DE)
(72) Erfinder: PALM, Frank, 82024 Taufkirchen (DE)
(74) Vertreter: Isarpatent

(56) Entgegenhaltungen:
- WO-A1-2008/067868
- DE-A1- 4 412 768
- US-A1- 2010 143 185
- US-B1- 6 468 468
- ZÜNIGA, A. ET AL.: METALLURGICAL AND MATERIALS TRANSACTIONS A, Bd. 37, Nr. 4, 2006, Seiten 1343-1352, XP002795549,
- BARTOVA B ET AL: "Structure and properties of rapidly solidified Al-Cr-Fe-Ti-Si powder alloys", JOURNAL OF ALLOYS AND COMPOUNDS, ELSEVIER SEQUOIA, LAUSANNE, CH, Bd. 387, Nr. 1-2, 25. Januar 2005 (2005-01-25), Seiten 193-200, XP025330024, ISSN: 0925-8388, DOI: 10.1016/J.JALLCOM.2004.06.049 [gefunden am 2005-01-25]
- SAVALANI ET AL: "Selective Laser Melting of Aluminum and its alloys", NZ RAPID PRODUCT DEVELOPMENT CONFERENCE, Februar 2011 (2011-02), Seiten 1-5, XP002686966, Auckland, New Zeland

## Beschreibung

### Gebiet der Erfindung

Die Erfindung betrifft ein Verfahren zur Passivierung der Oberfläche von aluminiumhaltigem Pulver sowie das dadurch herstellbare passivierte Pulver und dessen Verwendung in einem Schichtfertigungsverfahren (Additive-Layer-Manufacturing-Verfahren (ALM-Verfahren)).

### Hintergrund der Erfindung

Die Pulvermetallurgie und das Sintern von Metallen und Metalllegierungen sind bekannte Techniken zur Herstellung von Metallgegenständen. Wenn vorgepresste Formteile aus feinen Materialien (Pulver) gesintert werden, können feste Metallteile mit genau definierten Maßen und Eigenschaften entstehen. Gewöhnlich werden Pulver aus reinem Metall oder aus Metalllegierungen (nachstehend gemeinsam als Metallpulver bezeichnet) in Korngrößen unter etwa 0,6 mm benötigt. Die Art der Pulverherstellung übt einen starken Einfluss auf die Eigenschaften der Pulver aus. Deshalb wurden sehr viele verschiedene Verfahren entwickelt, wie mechanische Verfahren, chemische Reduktionsverfahren, elektrolytische Verfahren, Carbonylverfahren sowie Schleuder- und Verdüsungsverfahren.

Das Pulver wird dann üblicherweise in Presswerkzeugen unter hohem Druck (zwischen 1 und 10 t/cm²) zu sogenannten Grünlingen verdichtet. Es gibt aber auch weitere Verfahren, z.B. das Verdichten durch Vibration, das Schlickergießverfahren, Schüttverfahren und Verfahren mit Zusatz von Bindemitteln.

Bei der Wärmebehandlung (dem Sintern) werden die Pulverkörnchen an ihren Berührungsflächen durch Diffusion der Metallatome in einen festen Verbund gebracht. Die Sintertemperatur liegt bei einphasigen Pulvern, die aus einheitlichem Material bestehen, im Allgemeinen zwischen 65 und 80 % der Solidustemperatur, während bei mehrphasigen Pulvern in der Nähe oder oberhalb der Solidustemperatur der am niedrigst schmelzenden Phase gesintert wird. Die Zwischenräume offenporiger Werkstücke können nach dem Sintern durch Tauchen in eine Metallschmelze ausgefüllt werden. Die Sinterung erfolgt gewöhnlich unter Schutzgas oder im Vakuum.

Sintermetalle sind porös, wobei Dichtigkeiten bis 99 % erreichbar sind. Eine vollständige Verdichtung kann z.B. durch Warmwalzen erfolgen. Die Werkstücke weisen (bei geeigneter Kalibrierung) hohe Maßgenauigkeit und Oberflächengüte auf.

Beim isostatischen Heißpressen werden Metallpulver gleichzeitig Sintertemperaturen und hohen Drücken ausgesetzt. Damit kann eine Verdichtung bis zu 100% der theoretischen Dichte erzielt werden.

Ein relativ neues pulvermetallurgisches Verfahren besteht darin, ein Bauteil aus Metall oder einer Metalllegierung im schichtweisen Aufbau aus einem Pulver herzustellen (auch bekannt als generatives Herstellungsverfahren, Rapid Prototyping, Rapid Manufacturing oder Additive Layer Manufacturing (ALM)). Bei diesem Verfahren wird ein dreidimensionales CAD-Modell digital in dünne Schichten geschnitten; diese digitalen Daten werden in eine Steuervorrichtung eingespeist, die wiederum eine Wärmequelle sowie das Bereitstellen des Werkstoffpulvers steuert, aus dem das Bauteil Schicht für Schicht in endkonturnaher Form (auf Englisch "near net shape") aufgebaut wird. Das Grundprinzip des Aufbaus einer Schicht beruht auf einer kontinuierlichen lokalen Ablagerung von Metall oder einer Metalllegierung in Form von Pulver oder durch Abschmelzen von einem Draht oder Stab aus dem Metall oder der Metalllegierung, wobei das Metall oder die Metalllegierung durch eine bewegliche Wärmequelle (z.B. Laser- oder Elektronenstrahl oder Lichtbogen) geschmolzen, mit der darunter liegenden Schicht stoffschlüssig verbunden und anschließend wieder abgekühlt wird.

Verschiedene Ausführungsformen des Auftragens einer Schicht mit Hilfe eines Pulverbettanlagenkonzepts sind dem Fachmann in englischer Sprache als Direct Metal Laser Sintering (DMLS), Selective Laser Sintering (SLS), Selective Electron Beam Melting (SEBM), LaserCusing oder Selective Laser Melting (SLM) bekannt. Das Auftragen einer Schicht durch Auftragschweißen mittels Pulverzufuhr z.B. über eine Düse ist dem Fachmann in englischer Sprache als Direct Metal Deposition (DMD), Laser Engineered Net Shaping (LENS), Laser Rapid Forming (LRF) oder Laser Cladding (LC) bekannt. Oft wird dabei auch von "nozzle feed" oder "powder feed" bzw. "blowing powder" gesprochen.

Aluminium wird wegen seiner geringen Dichte gerne als Konstruktionswerkstoff verwendet, insbesondere bei Anwendungen, bei denen eine geringe Masse erwünscht ist, wie dies bei Transportmitteln in der Luft- und Raumfahrt der Fall ist.

Aluminium ist allerdings relativ weich und hat eine geringe Zugfestigkeit. Diese Eigenschaften und auch andere lassen sich durch Legieren mit anderen Metallen wesentlich verbessern. Beispielsweise kann durch Zulegierung von Scandium eine erhöhte Festigkeit erzielt werden. Jedoch liegt die Dichte von Scandium mit 2,98 g/cm³ über der von Aluminium mit 2,7 g/cm³. Deshalb werden häufig noch andere, leichte Metalle hinzulegiert, die das Gewicht der Legierung verringern.

Aluminium-Scandium-Legierungen sind gut bekannt und die Eigenschaften von einigen werden z.B. in den folgenden Veröffentlichungen beschrieben:
- A.J. Bosch, R. Senden, W. Entelmann, M. Knüwer, F. Palm "Scalmalloy®: A unique high strength and corrosion insensitive AlMgScZr material concept", Proceedings of the 11th International Conference on Aluminium Alloys
- F. Palm, P. Vermeer, W. von Bestenbostel, D. Isheim, R. Schneider "Metallurgical peculiarities in hyper-eutectic AISc and AlMgSc engineering materials prepared by rapid solidification processing", Proceedings of the 11th International Conference on Aluminium Alloys.

Wenn allerdings Pulver aus Aluminium oder einer Aluminiumlegierung (nachfolgend oft gemeinsam als aluminiumhaltiges Pulver bezeichnet) in der Pulvermetallurgie und insbesondere beim ALM verwendet werden, treten spezielle Schwierigkeiten auf.

Es ist bekannt, dass die Qualität von durch ALM aufgebauten Produkten aus Aluminium oder einer Aluminiumlegierung, z.B. einer AlSc-Legierung, stark von der Menge der im Produkt vorhandenen (Rest)Porosität - sowohl bezüglich Volumenanteilen als auch bezüglich der Verteilung - abhängt. Ursachen für eine ungewollte Porosität sind einerseits ungeeignete Prozessparameter beim Produktaufbau und andererseits mit Feuchtigkeit (H₂O) verunreinigtes aluminiumhaltiges Pulver. Beim Schmelzen des Pulvers, das meist bereits nominell immer etwas Wasserstoff enthält (wenn auch gewöhnlich nur in geringen Mengen < etwa 10 ppm) entsteht durch die Umsetzung von Aluminium und Wasser neben Aluminiumoxid weiterer Wasserstoff, der in Form von wasserstoffhaltigen Poren im umgeschmolzenen Werkstoff zurückbleibt. Wenn unverbrauchtes, nicht geschmolzenes Pulver aus den Laser-Pulverbett-Schmelzanlagen aus Kostengründen ein- bis mehrmals wiederverwendet wir, nimmt die Kontamination des Pulvers mit Wasser durch die allgemeine Handhabung immer weiter zu.

Die Ursache für die Kontamination des aluminiumhaltigen Pulvers mit Wasser ist die dünne Al₂O₃-Schicht, die sich wegen ihrer großen negativen Bildungsenthalpie (ΔH_{f}⁰ = 1676 kJ·mol⁻¹) und einer geringen Aktivierungsenergie der Reaktion bereits bei extrem kleinen Sauerstoff-Partialdrücken (etwa > 10 ppb) auf Aluminium ausbildet. Die Oxidschicht adsorbiert und absorbiert sehr schnell in der Umgebung vorhandene Restfeuchtigkeit (H₂O). Die entstandene Al₂O₃-H₂O- (oder auch AlO(OH)ₓ-) Schicht wächst wegen der Exothermie der Reaktion mit der Zeit parabolisch, gewöhnlich bis eine Schichtdicke von etwa 500 nm oder unter Umständen sogar von mehreren µm erreicht wird.

Diese Reaktion von Aluminium mit Sauerstoff und anschließend Wasser kann nur unter Ultrahochvakuum-Bedingungen (< 10⁻⁹ mbar) vermieden werden. In technischen Umgebungen (selbst in Vakuum- oder Schutzgaskammern) sind immer hinreichende Mengen an O₂ und H₂O vorhanden, um eine Kontamination zu verursachen.

Das aluminiumhaltige Pulver, das in ALM-Verfahren eingesetzt wird, wird im Allgemeinen durch Verdüsung von flüssigem Aluminium oder flüssiger Aluminiumlegierung mit Argon und/oder Helium einer Gasqualität von mindestens 4.0 (= 99,99 %-ig) gewonnen. Insbesondere darf der Restgehalt an H₂O 25 ppm nicht übersteigen, sonst werden in dem Pulver durch Reaktion von H₂O mit dem heißen Aluminium zu Al₂O₃ und H₂ bereits bei der Herstellung zu große Mengen von Letzterem eingeschlossen. Aber bereits durch die Handhabung des Pulvers beim Befüllen der Pulverbettmaschine einer Pulverbett-ALM-Vorrichtung entsteht soviel AlO(OH)ₓ, dass sich beim Schmelzen und anschließendem Abkühlen des Pulvers unerwünscht viele Poren bilden können. Bei der Entnahme von unverbrauchtem Pulver kommt dieses dann erneut mit der Umgebungsatmosphäre (Laborluft) in Kontakt und ad-/absorbiert dabei zusätzlich bedeutende Mengen an O₂ und H₂O unter Bildung von Aluminiumoxidenhydroxiden.

Durch Trocknen (50 - 100°C) ist die im aluminiumhaltigen Pulver vorhandene Feuchtigkeit nicht ausreichend zu entfernen, da physikalisch ad- oder absorbiertes H₂O erst ab etwa 250°C aus Al₂O₃ ver- bzw. abdampft. Das Aufbrechen der Aluminiumoxid-hydroxid-Bindung unter Freisetzung vom Wasser benötigt sogar Temperaturen von mindestens etwa 400°C. Wenn man statt in einer Argonatmosphäre unter Hochvakuum arbeitet, was die Trocknung aufgrund der geringeren Partialdrücke verbessert würde, versintert das Pulver, unter dem Einfluss der Schwerkraft und verliert seine erforderliche Rieselfähigkeit.

Die WO 2008/067868 A1 stellt ein Verfahren zur kontrollierbaren Herstellung von Partikeln eines freifließenden Materials bereit, sowie eine Vorrichtung zur Durchführung des Verfahrens.

Der DE 10 2007 018123 A1 ist ein schnelles Prototyping-Verfahren zur Herstellung einer strukturellen Komponente aus einer aluminiumbasierten Legierung zu entnehmen.

In der US 5 462 712 A sind aluminiumbasierte Legierungen enthaltend Cu, Li, Zn und Mg offenbart.

Der US 6 468 468 B1 kann ein Verfahren zur Herstellung gesinterter Teile aus einer Aluminium-Sintermischung entnommen werden.

Bartova, B. et al., "Structure and properties of rapidly solidified Al-Cr-Fe-Ti-Si powder alloys", Journal of Alloys and Compounds, 387, 1-2, S. 193-200 beschreiben die Struktur und Eigenschaften von schnell erhärteten Al-Cr-Fe-Ti-Si-Pulverlegierungen.

Die JP 2009 091624 A offenbart ein aluminiumbasiertes Material, welches Kristallkörner einer Aluminiumlegierung enthält.

Die US 2010/0143185 stellt ein Verfahren zur Herstellung einer Aluminium-Pulverlegierung hoher Stärke bereit.

K. Schmidtke et al., "Process and Mechanical Properties: Applicability of a Scandium modified Al-alloy for Laser Additive Manufacturing", Physics Procedia, 12, S. 369-374, DOI: 10.1016/J.PHPRO.2011.03.047, erwägen die Verwendbarkeit einer Scandium enthaltenden Aluminiumlegierung für Laser Additive Manufacturing.

R. Ünal und K.U. Kainer beschreiben in "Production of high strength Al-Mg-Sc alloys by PH", Powder Metallurgy, 41, 2, S. 119-122, 1998, die Herstellung von Pulvern aus Al-Sc und Al-Mg-Sc-Legierungen mit bis zu 2 Gew.-% Sc-Gehalt durch Hochenergie-Inertgas-Atomisierung.

In Zúñiga, A. et al., Metallurgical and Materials Transactions A, 37, 4, S. 1343-1352, 2006 ist zudem ein Verfahren zum Plasmasintern einer Al-Cu-Mg-Fe-Ni-Sc-Legierung beschrieben.

Ziel der Erfindung war es somit, ein aluminiumhaltiges Pulver bereitzustellen, dessen Oberfläche so beschaffen ist, dass die Verarbeitung desselben in einer ALM-Anlage zu Aluminiummaterial ohne Wasserstoffporen uneingeschränkt möglich wird, selbst wenn das Pulver mehrfach benutzt wird. Voraussetzung dafür ist, dass zumindest über einen signifikanten Zeitraum keine wesentliche "feuchte" Oxidation zu Al₂O₃ x H₂O stattfindet, bzw. die Ad- oder Absorption von Wasser an der Oberfläche des Pulvers weitgehend verhindert wird.

### Zusammenfassung der Erfindung

In einem ersten Aspekt betrifft die Erfindung ein Verfahren zur Herstellung eines Pulvers aus einer Aluminiumlegierung mit inaktivierter oder passivierter (physikalisch-chemisch inaktiver) Oberfläche, das dadurch gekennzeichnet ist, dass eine Schmelze der Aluminiumlegierung mit Hilfe eines Verdüsungsgases, das aus 50 Vol.-% bis 100 Vol.-% molekularen Stickstoff und 50 Vol.-% bis 0 Vol.-% eines oder mehrerer Edelgase besteht, in einer Verdüsungsanlage zu einem Pulver verdüst wird, wobei die Legierung eine AlSc-Legierung ist, wobei die Legierung eine Legierung der Summenformel AlScWXYZ ist, worin W aus Li, Mg und Ca oder einer Mischung derselben ausgewählt ist und X aus der Gruppe Zr, Ti, Nb, Ta, Hf und Yttrium ausgewählt ist und Y aus der Gruppe Be, Zn, Mn, Ag, Cu, Si, V, Ni, Co, Cr, Mo und Fe ausgewählt ist und Z aus der Gruppe der Seltenerd-Elemente ausgewählt ist, wobei Legierungsbestandteile in den folgenden prozentualen Anteilen vorliegen, bezogen auf das Gesamtgewicht der Legierung:
- Sc-Gehalt 0,2 - 2 Gew.-%
- Mg-Gehalt 0,5 - 10 Gew.-%
- Li-Gehalt 0,2 - 3 Gew.-%
- Ca-Gehalt 0,2 - 2 Gew.%
- Gehalt der X-Elemente: 0,05 - 1,5 Gew.-%
- Gehalt der Y-Elemente: 0,2 - 8 Gew.%
- Gehalt zusätzlicher Seltenerd-Elemente: 0,2 - 3 Gew.-% oder das 0,25-bis 3-fache des Sc-Gehalts.

Ein weiterer Aspekt betrifft ein Pulver aus einer Aluminiumlegierung mit passivierter Oberflächenschicht, welches durch das Verfahren des ersten Aspekts erhältlich ist.

Schließlich betrifft die Erfindung die Verwendung des erfindungsgemäßen Pulvers oder eines Pulvers, das durch das erfindungsgemäße Verfahren hergestellt ist, in einem Additive-Layer-Manufacturing-Verfahren , ausgewählt aus einem PulverBett-Verfahren und/oder Pulver-Düse-Verfahren zum Aufbau von Bauteilen.

Beschrieben ist ein Verfahren zur Herstellung eines Pulvers aus Aluminium oder einer weiteren Aluminiumlegierung außer einer AlSc-Legierung mit passivierter (physikalisch-chemisch inaktiver) Oberfläche, das dadurch gekennzeichnet ist, dass eine Schmelze von Aluminium mit Hilfe eines Verdüsungsgases, das etwa 1 Vol.-% bis 100 Vol.-% molekularen Stickstoff und etwa 99 Vol.-% bis 0 Vol.-% eines oder mehrerer Edelgase umfasst, zu einem Pulver verdüst wird.

Die Unteransprüche geben spezielle Ausführungsformen der Erfindung an.

### Detaillierte Beschreibung

Es wurde überraschend gefunden, dass ein aluminiumhaltiges Pulver, das auf die erfindungsgemäße Weise verdüst wird, keine oder nur minimale Mengen Wasser ad- oder absorbiert und deshalb bei der Verarbeitung mittels eines ALM-Verfahrens, insbesondere eines Pulverbett-ALM-Verfahrens, keine wasserstoffhaltigen Poren erzeugt. Selbst wenn unverbrauchtes Pulver mehrfach, im Allgemeinen bis zu 5-mal, 7-mal oder sogar 10-mal, wiederverwendet wird und/oder über mehrere Monate, wie 3 Monate, 5 Monate, 8 Monate 12 Monate, 24 Monate 36 Monate und manchmal bis zu soviel wie etwa 4 oder 5 Jahre, in einem verschlossenen Gefäß mit normaler Umgebungsatmosphäre gelagert wird, behält es diese Eigenschaften bei.

Ohne durch eine Theorie gebunden sein zu wollen, werden die folgenden chemischen Vorgänge angenommen.

Durch den großen Überschuss an molekularem Stickstoff über Sauerstoff (mindestens 50 Vol.-% gegenüber einigen zehn ppm, d.h. mindestens ein etwa 100- bis etwa 1000-facher Überschuss) im Verdüsungsgas wird die Bildung von Al₂O₃ unterdrückt und stattdessen bildet sich einige Atomlagen einer Schicht aus Aluminiumnitrid (AIN).

Aluminiumnitrid ist eine seit langem bekannte Verbindung. Ihre Bildungsenthalpie (ΔH_{f}⁰ = 318 kJ·mol⁻¹) ist erheblich kleiner als die von Al₂O₃. AIN-Pulver hydrolysiert gewöhnlich in Anwesenheit von Wasser oder Atmosphärenfeuchtigkeit mehr oder weniger schnell in einer exothermen Reaktion zu Al₂O₃ und NH₃. Die Hydrolyse kann jedoch anfänglich gehemmt sein und ihre Geschwindigkeit hängt stark von der Art der Herstellung des Pulvers ab (siehe die Veröffentlichung: Jinwang Li et al., Hydrolysis of Aluminum Nitride Powders in Moist Air, AZojomo (Journal of Materials Online), October 2005, Vol. 1, pages 1-10).

Man würde erwarten, dass eine dünne AlN-Schicht auf der Oberfläche eines aluminiumhaltigen Pulverteilchens sehr schnell hydrolysiert wird. Dies ist jedoch, wie bereits oben erwähnt, überraschenderweise nicht der Fall, wenn das Pulver gemäß der Erfindung durch Verdüsen von geschmolzenem aluminium-haltigen Metallmaterial mit einem Edelgas, das mindestens 50 Vol.-% Stickstoff umfasst, hergestellt wird. Die Hydrolysereaktion ist bei derartigen Pulvern offensichtlich kinetisch stark gehemmt. Sie sind gegenüber einer Oxidation durch Sauerstoff und Hydrolyse durch Wasser weitgehend inert und bilden außerdem eine Oberflächennitridschicht, die von diesen beiden Agenzien nicht permeiert wird. Die Ursache dafür wird nicht vollständig verstanden.

Im Fall von Legierungen kann Stickstoff unter den Bedingungen der Verdüsung auch mit anderen Bestandteilen der Legierung außer Aluminium, die an der Oberfläche der Legierung vorhanden sind, reagieren, sofern diese Nitridbildner sind, wie z.B. Scandium, Titan, Zirconium, Hafnium, Vanadium, Niob, Tantal, Chrom und Molybdän.

Scandiumnitrid (ScN) unterliegt gewöhnlich wie AIN im Lauf der Zeit einer Hydrolysereaktion. Wiederum wurde überraschend beobachtet, dass dies im Fall von AISc- oder AlScWXYZ-Legierungen nicht der Fall ist, wenn deren Schmelze erfindungsgemäß mit (einem) mindestens 50 Vol.-% Stickstofff enthaltenden Edelgas(en) zu Pulver verdüst wird. Die dünne passivierende OberflächenNitridschicht ist ebenfalls für Sauerstoff und Wasser undurchdringbar.

Titan, Zirconium, Hafnium, Vanadium, Niob, Tantal, Chrom und Molybdän bilden mit Stickstoff sogenannte Hartphasen, die äußerst reaktionsträge sind.

Als Ausgangsmaterial für das erfindungsgemäße Verfahren eignen sich Schmelzen von Legierungen auf Aluminiumbasis, wobei die Legierung eine AISc-Legierung ist, wobei die Legierung eine Legierung der Summenformel AlScWXYZ ist, worin W aus Li, Mg und Ca oder einer Mischung derselben ausgewählt ist und X aus der Gruppe Zr, Ti, Nb, Ta, Hf und Yttrium ausgewählt ist und Y aus der Gruppe Be, Zn, Mn, Ag, Cu, Si, V, Ni, Co, Cr, Mo und Fe ausgewählt ist und Z aus der Gruppe der Seltenerd-Elemente ausgewählt ist, wobei Legierungsbestandteile in den folgenden prozentualen Anteilen vorliegen, bezogen auf das Gesamtgewicht der Legierung:
- Sc-Gehalt 0,2 - 2 Gew.-%
- Mg-Gehalt 0,5 - 10 Gew.-%
- Li-Gehalt 0,2 - 3 Gew.-%
- Ca-Gehalt 0,2 - 2 Gew.%
- Gehalt der X-Elemente: 0,05 - 1,5 Gew.-%
- Gehalt der Y-Elemente: 0,2 - 8 Gew.%
- Gehalt zusätzlicher Seltenerd-Elemente: 0,2 - 3 Gew.-% oder das 0,25-bis 3-fache des Sc-Gehalts, oder
   wobei die Legierung eine AlSc-Legierung ist, wobei die Legierung die folgende Legierung ist:
   - Mg(0,5-10)Sc(0,2-2,0)Zr(0,2-2,0) (Gew.-%) und Al und unvermeidliche Verunreinigungen als Rest, oder
   wobei die Legierung eine AlSc-Legierung ist, wobei die Legierung aus den folgenden Legierungen ausgewählt ist
   - Mg(0,5-10)Sc(0,2-2,0)Zr(0,2-2,0)Mn(0,1-1,0) (Gew.-%)und Al und unvermeidliche Verunreinigungen als Rest; und
   - Mg(2,5-5.0)Sc(0,3-1,0)Zr(0,2-0,5)Mn(0,1-0,8) (Gew.%) und Al und unvermeidliche Verunreinigungen als Rest.

Unter den Legierungen auf Aluminiumbasis, die kein Scandium enthalten, sind z.B. z.B. AlSi7-12MgXYZ-Legierungen, AlZnMgXYZ-Legierungen und AlCuXYZ-Legierungen.

Viele AlSc-Legierungen sind, wie oben erwähnt, in A.J. Bosch, R. Senden, W. Entelmann, M. Knüwer und F. Palm, a.a.O. und in F. Palm, P. Vermeer, W. von Bestenbostel, D. Isheim, R. Schneider, a.a.O, ausführlich beschrieben. Wichtige AlScWXYZ-Legierungen sind AlScLiXYZ-Legierungen, AlScMgXYZ-Legierungen, die auch in der DE 10 2007 018 123 A1 beschrieben sind, und AlScCaXYZ-Legierungen, die in der mitanhängigen DE 102010053274 mit der Bezeichnung "Verfahren zur Herstellung eine AlScCa-Legierung sowie AlScCa-Legierung" offenbart sind. Diese Legierungen, insbesondere die beiden letztgenannten, eignen sich besonders gut für die Verwendung in ALM-Verfahren, da sie dabei Bauteile mit hervorragenden Materialeigenschaften, wie hoher Festigkeit, hoher Streckgrenze, hervorragendem Korrosionsverhalten und sehr guter Schweißbarkeit, liefern.

Die Legierungsbestandteile XYZ sind aus der Gruppe Zr, Ti, Nb, Ta, Hf und Yttrium für X und aus der Gruppe Be, Zn, Mn, Ag, Cu, Si, V, Ni, Co, Cr, Mo und Fe für Y und aus der Gruppe der Seltenerd-Elemente für Z ausgewählt.

Oben beschriebene Legierungsbestandteile liegen in den folgenden prozentualen Anteilen vor, bezogen auf das Gesamtgewicht der Legierung:
- Sc-Gehalt 0,2 - 2 Gew.-%
- Mg-Gehalt 0,5 - 10 Gew.-%
- Li-Gehalt 0,2 - 3 Gew.-%
- Ca-Gehalt 0,2 - 2 Gew.%
- Gehalt der X-Elemente: 0,05 - 1,5 Gew.-%
- Gehalt der Y-Elemente: 0,2 - 8 Gew.%
- Gehalt zusätzlicher Seltenerd-Elemente: 0,2 - 3 Gew.-% oder das 0,25- bis 3-fache des Sc-Gehalts.

Die Herstellung von Aluminium- und Aluminiumlegierungsschmelzen ist dem Fachmann bekannt. Die Elemente werden gegebenenfalls in Form einer oder mehrerer Vorlegierungen in der gewünschten Stöchiometrie in einen beheizten inerten Tiegel gegeben und für die erforderliche Zeit bei der erforderlichen Temperatur erwärmt, bis alle Bestandteile in der Schmelze gelöst sind. Diese Parameter können mittels eines thermodynamischen Simulationsprogramms (z.B. PANDAT®) oder anhand binärer und ternärerer Zustandsdiagramme abgeschätzt werden. Wenn Legierungsbestandteile anwesen sind, die bei der erforderlichen Temperatur mehr oder weniger quantitativ mit Sauerstoff und/oder Wasser reagieren (z.B. die Alkalimetalle), muss die Legierungsbildung in Edelgasatmosphäre vorgenommen werden, ansonsten wird in normaler Umgebungsatmosphäre (Luft) gearbeitet.

Danach wird die Haltetemperatur auf einen Wert von etwa 30 - 50 °C oberhalb der nominellen Liquidus-Temperatur eingestellt und man bestimmt anhand einer Materialprobe die genauen Solidus-Liquidus-Temperaturen der Legierung mittels Differentialscanningkalorimeter (DSC) und die tatsächliche chemische Zusammensetzung.

Falls die gewünschte Stöchiometrie z.B. durch Abbrand von Erdalkalimetallen nicht mehr vorliegt, muss gegebenenfalls nachlegiert werden. Erforderlichenfalls kann die Legierungsschmelze z.B. durch Zugabe von Chlorid-Tabletten von Alkalimetallverunreinigungen und durch Spülen mit Argon von Wasserstoff weitgehend befreit werden.

Nun wird die Schmelze verdüst. Metallverdüsungsanlagen sind dem Fachmann bekannt (z.B. aus der WO 03/066640 A1 und der EP 1 008 407 A2) und im Handel erhältlich.

Die Schmelze wird in die Verdüsungsanlage umgefüllt und dort bei einer Temperatur von im Allgemeinen etwa 50°C über der Liquidus-Temperatur gehalten, um ein Einfrieren der Schmelze im Verdüsungsrohr zu verhindern.

Das zur Verdüsung verwendete Gas ist erfindungsgemäß eine Mischung aus Edelgas(en), bevorzugt Argon und/oder Helium, und mindestens 50, bevorzugter minderstens etwa 60, etwa 70, etwa 80, etwa 90 Vol.-% Stickstoff oder es besteht im Wesentlichen zu 100% aus Stickstoff.

Geeignete Prozessparameter, also Durchsatz, Druck und Temperatur des Gases, richten sich nach der Materialzusammensetzung der Schmelze und können vom Fachmann leicht ermittelt werden.

Die Teilchengröße des Pulvers wird durch die Größe und Form (z.B. Laval-Düse) der Austrittsöffnung der Düse und die Gas-Geschwindigkeit und Gastemperatur sowie Gasdruck festgelegt, mit der die Teilchen aus der Erstgenannten austreten.

Für ALM-Verfahren nützliche Teilchengrößen liegen im Bereich von etwa 0,5 µm bis etwa 150 µm, bevorzugt im Bereich von etwa 25 µm bis etwa 65 µm. Sollen Bauteile mit feinsten Abmessungen hergestellt werden, ist das Feld für die Teilchengröße 2 µm bis etwas 15 µm, was gleichzeitig eine Anpassung an die Fokussierbarkeit der verwendete Wärmequelle (Laser oder Elektronenstrahl) bedingt.

Mit den so hergestellten Aluminiumlegierungspulvern ist es mittels eines ALM-Verfahrens möglich, porenfreie oder fast porenfreie endkonturnahe ("near net shape") Bauteile mit hervorragenden Materialeigenschaften herzustellen. Durch die hohen Temperaturen in der Wärmequelle des ALM-Verfahrens, wie einem Laser, einem Elektronenstrahl oder einem Lichtbogen, erscheint es möglich, dass bestimmte Nitride, z.B. AIN oder ScN, in reines Al oder Sc und in der Schmelze gelöstes Stickstoff zurückverwandelt werden, da im Material bei Nachuntersuchungen bis jetzt keine primär ausgeschiedenen Al- oder Sc-Nitride gefunden werden konnten.

Aufbauversuche in einer Laser Pulver Bett ALM-Maschine haben gezeigt, dass unverbrauchtes Pulver im Allgemeinen bis zu 10-mal wiederverwendet werden kann.

Das gemäß der Erfindung modifizierte Pulver kann auch ohne Probleme bezüglich einer Verunreinigung mit Sauerstoff oder Wasser monatelang oder sogar jahrelang in einem geschlossenen Behälter unter Umgebungsatmosphäre (Luft) aufbewahrt werden und ist dann immer noch für eine Kommerzialisierung bzw. kommerzielle Anwendung brauchbar und zugänglich, was heißt das es kostengünstig verwendbar ist und den Prozessführer nicht zum Kauf neuen Pulvers zwingt, was wiederum ein großer Vorteil gegenüber den heute kommerziell verwendeten Al-Pulver klassischer Prägung bedeutet, welche bekanntermaßen sehr schnell verschmutzen und dann nicht mehr zu einwandfreien Prozessergebnisse führen.

Die folgenden Beispiele erläutern die Erfindung, ohne sie einzuschränken.

### BEISPIELE

### A. Werkstoffgenerierung unter Verwendung eines Al-Pulvers nach bekannter Art

In einer Laser gestützten Pulverbett-Anlage der Marke EOS EOSINT M270 wurde ein Probekörper aus einer Al-Legierung mit der nominellen Zusammensetzung von Mg(4,3 Gew.-%), Sc(0,7 Gew.-%), Zr(0,3 Gew.-%), Mn(0,5 Gew.-%) und Al und unvermeidliche Verunreinigungen als Rest. Die Beschaffenheit des Probekörpers wurde unter dem Mikroskop untersucht, insbesondere wurde das Gefüge des Probekörpers untersucht.

Das in diesem Beispiel verwendete Pulver war unter Argon (Qualität 4.6) verdüst worden und war über mehrere Wochen im Labor in Verwendung. Das Pulver wurde für den schichtweisen Aufbau von fünf Probekörpern eingesetzt, also viermal wiederverwendet, wobei proprietäre Prozessparameter wie beispielsweise die Laserleistung und -fokus, die Scangeschwindigkeit des Lasers beim Aufbau des Probekörpers, das Laser-Beleuchtungsmuster Anwendung fanden.

Der schichtweise Aufbau (Laserschmelzen) wurde in einer Arbeitskammer unter Ar durchgeführt, sodass keine exotherme (oxidische) Reaktion während des Aufbauprozesses zu erwarten ist.

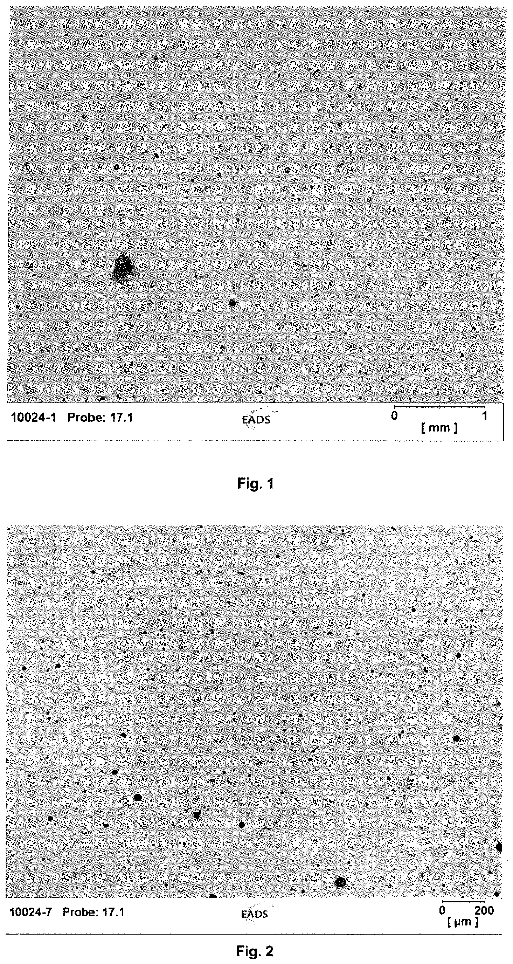

Die in den Figuren 1 und 2 gezeigten metallographischen Schliffe zeigen ein Gefüge und eine Vielzahl von Poren, welche aufgrund ihrer Rundheit unstreitbar als Wasserstoffporen zu deuten sind. Besonders die sehr gleichmäßige Verteilung der Poren ist ein deutliches Indiz für die ungewollte Belegung-Kontamination des Al-Pulvers mit Feuchtigkeit. Der so hergestellte Werkstoff hat somit eine Vorschädigung, welcher seine Festigkeit (Dauerhaftigkeit) negativ beeinflussen kann.

### B. Werkstoffgenerierung unter Verwendung eines Al-Pulvers

In einer Laser gestützten Pulverbett-Anlage der Marke EOS EOSINT M270 wurde ein Probekörper aufgebaut, wobei das hergestellte Pulver verwendet wurde. Eine Al-Legierung mit der nominellen Zusammensetzung von Mg(4,3 Gew.-%), Sc(0,7 Gew.-%), Zr(0,3 Gew.-%), Mn(0,5 Gew.-%) und Al und unvermeidliche Verunreinigungen als Rest wurde in einem Tigel durch induktive Aufheizung erschmolzen, wobei das Material des Tigels sich gegenüber der Aluminiumschmelze inert verhält. Die dabei einzustellende Temperatur berücksichtigt, dass alle Legierungselemente insbesondere, hochschmelzendes Sc und Zr vollständig gelöst sind. Daraus resultiert eine Schmelztemperatur, die über der Solidus-Liquidus Temperatur der Legierung liegt.

Im Nachgang wird die Schmelze durch eine konische lavalförmig ausgebildete Düse gepresst, wobei die Schmelze in einem geschlossenen Tigel mit einem passenden Gasüberdruck von 10-20 mbar beaufschlagt wird.

Die Lavaldüse ist von einem zweiten Düsenring umgeben, durch den ein Verdüsungsgas auf den geschmolzenen flüssigen Metallstrom trifft. Da das Verdüsungsgas unter Hochdruck von 5-10 bar und hoher Geschwindigkeit aus dem Düsenring auf den Metallstrom trifft, wird der Metallstrom in feinste Pulverpartikel zerstäubt. Das Verdüsungsgas bestand aus reinem Stickstoff (Qualität 4.5).

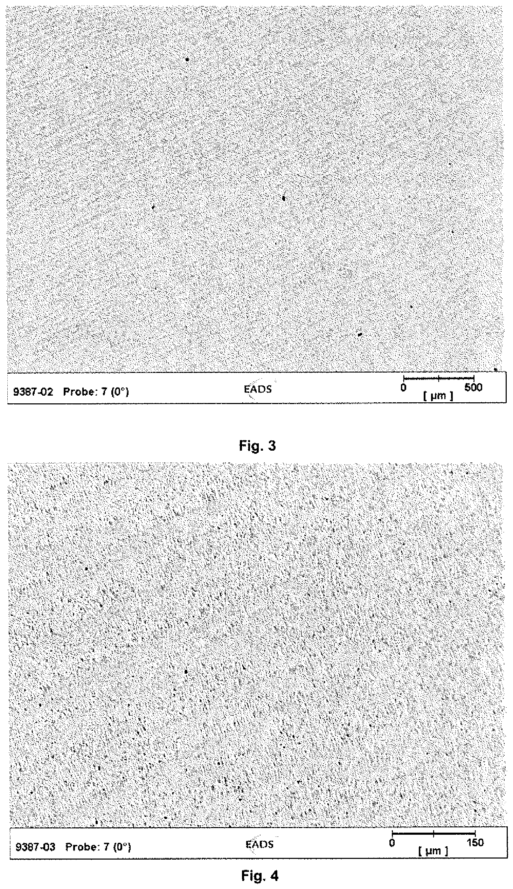

Darüber hinaus wurden die gleichen Prozessparameter und -Randbedingungen wie beim Beispiel A verwendet, insbesondere wurde das Pulver viermal wiederverwendet. Die Figuren 3 und 4 zeigen die Gefügemerkmale des sich ergebenden Probekörpers.

Dieses Gefüge weist nur sehr geringe Poren mit vernachlässigbarer Größe auf, ist somit leistungsfähiger, wobei seine Eigenschaften vergleichbar mit dem eines porenfreien Gefüges sind. Gleichzeitig zeigt die Wiederverwendbarkeit des erfindungsgemäßen Pulvers dessen ökonomische Vorteile.

Versuche mit anderen Al-Basis-Legierungen, die erfindungsgemäß verdüst wurden, wie z.B. AlSiMg-Legierungen zeigen das gleiche vorteilhafte Verhalten, werden hier aber nicht explizit dargestellt.

## Patentansprüche

1. Verfahren zur Herstellung eines Pulvers aus einer Aluminiumlegierung mit inaktiver oder passivierter Oberfläche, **dadurch gekennzeichnet, dass** eine Schmelze der Aluminiumlegierung mit Hilfe eines Verdüsungsgases, das aus 50 Vol.-% bis 100 Vol.-% molekularen Stickstoff und 50 Vol.-% bis 0 Vol.-% eines oder mehrerer Edelgase besteht, in einer Verdüsungsanlage zu einem Pulver verdüst wird, **dadurch gekennzeichnet, dass** die Legierung eine AISc-Legierung ist, wobei die Legierung eine Legierung der Summenformel AlScWXYZ ist, worin W aus Li, Mg und Ca oder einer Mischung derselben ausgewählt ist und X aus der Gruppe Zr, Ti, Nb, Ta, Hf und Yttrium ausgewählt ist und Y aus der Gruppe Be, Zn, Mn, Ag, Cu, Si, V, Ni, Co, Cr, Mo und Fe ausgewählt ist und Z aus der Gruppe der Seltenerd-Elemente ausgewählt ist, wobei Legierungsbestandteile in den folgenden prozentualen Anteilen vorliegen, bezogen auf das Gesamtgewicht der Legierung:
- Sc-Gehalt 0,2 - 2 Gew.-%
- Mg-Gehalt 0,5 - 10 Gew.-%
- Li-Gehalt 0,2 - 3 Gew.-%
- Ca-Gehalt 0,2 - 2 Gew.%
- Gehalt der X-Elemente: 0,05 - 1,5 Gew.-%
- Gehalt der Y-Elemente: 0,2 - 8 Gew.%
- Gehalt zusätzlicher Seltenerd-Elemente: 0,2 - 3 Gew.-% oder das 0,25- bis 3-fache des Sc-Gehalts, und Al und unvermeidliche Verunreinigungen als Rest.

2. Verfahren nach Anspruch 1, **dadurch gekennzeichnet, dass** das Verdüsungsgas 100 Vol.-% Stickstoff enthält.

3. Verfahren nach Anspruch 1 oder 2, **dadurch gekennzeichnet, dass** das Pulver mit einer mittleren Teilchengröße im Bereich von 5 µm bis 100 µm, bevorzugt im Bereich von 25 µm bis 65 µm hergestellt wird.

4. Verfahren nach einem der Ansprüche 1 bis 3, **dadurch gekennzeichnet, dass** die Schmelze bei einer Temperatur von 50°C oberhalb der Liquidus-Temperatur der Aluminiumlegierung in der Verdüsungsanlage gehalten wird.

5. Pulver aus einer Aluminiumlegierung mit passivierter Oberflächenschicht, erhältlich durch das Verfahren nach Anspruch 1.

6. Pulver nach Anspruch 5, **dadurch gekennzeichnet, dass** es in einem versandfähigen geschlossenen Behälter unter Umgebungsatmosphäre abgepackt ist.

7. Verwendung des Pulvers nach Anspruch 5 oder 6 oder hergestellt nach einem der Ansprüche 1 bis 3 in einem Schichtfertigungsverfahren (Additive-Layer-Manufacturing- (ALM)Verfahren), ausgewählt aus einem Pulver-Bett-Verfahren und/oder Pulver-Düse-Verfahren zum Aufbau von Bauteilen.

8. Verwendung nach Anspruch 7, bei der in einem direkten Schichtfertigungsverfahren zur Herstellung von 3-dimensionalen Bauteilen das Pulver mittels Strahlschmelzen geschmolzen wird, wobei die erzeugte Oberfläche inaktiv oder passiviert ist.

9. Verwendung nach Anspruch 7, wobei das Pulver aus einem zuvor durchgeführten Additive-Layer-Manufacturing-Verfahren zurückgewonnen wurde.

## Claims

1. Process for producing a powder composed of an aluminium alloy having an inactive or passivated surface, **characterized in that** a melt of the aluminium alloy is atomized in an atomization plant by means of an atomizing gas which consists of from 50% by volume to 100% by volume of molecular nitrogen and from 50% by volume to 0% by volume of one or more noble gases to give a powder, **characterized in that** the alloy is an AlSc alloy, where the alloy is an alloy having the empirical formula AlScWXYZ, where W is selected from among Li, Mg and Ca or a mixture thereof and X is selected from the group consisting of Zr, Ti, Nb, Ta, Hf and yttrium and Y is selected from the group consisting of Be, Zn, Mn, Ag, Cu, Si, V, Ni, Co, Cr, Mo and Fe and Z is selected from the group of the rare earth elements, where alloy constituents are present in the following percentages, based on the total weight of the alloy:
- Sc content 0.2 - 2% by weight
- Mg content 0.5 - 10% by weight
- Li content 0.2 - 3% by weight
- Ca content 0.2 - 2% by weight
- Content of the X elements: 0.05 - 1.5% by weight
- Content of the Y elements: 0.2 - 8% by weight
- Content of additional rare earth elements: 0.2 - 3% by weight or 0.25-3 times the Sc content, and Al and unavoidable impurities as balance.

2. Process according to Claim 1, **characterized in that** the atomizing gas contains 100% by volume of nitrogen.

3. Process according to Claim 1 or 2, **characterized in that** the powder is produced with an average particle size in the range from 5 µm to 100 µm, preferably in the range from 25 µm to 65 µm.

4. Process according to any of Claims 1 to 3, **characterized in that** the melt is maintained at a temperature of 50°C above the liquidus temperature of the aluminium alloy in the atomization plant.

5. Powder composed of an aluminium alloy having a passivated surface layer, obtainable by the process according to Claim 1.

6. Powder according to Claim 5, **characterized in that** it is packed under the ambient atmosphere in a closed container capable of being transported.

7. Use of the powder according to Claim 5 or 6 or produced according to any of Claims 1 to 3 in an Additive Layer Manufacturing (ALM) process, selected from a powder bed process and/or a powder nozzle process for the building-up of components.

8. Use according to Claim 7, wherein the powder is melted by means of beam melting in a direct additive layer manufacturing process for producing three-dimensional components, with the surface produced being inactive or passivated.

9. Use according to Claim 7, wherein the powder has been recovered from an additive layer manufacturing process carried out previously.

## Revendications

1. Procédé de fabrication d'une poudre en un alliage d'aluminium ayant une surface inactive ou passivée, **caractérisé en ce qu'**une masse fondue de l'alliage d'aluminium est atomisée en une poudre dans une unité d'atomisation à l'aide d'un gaz d'atomisation, qui est constitué par 50 % en volume à 100 % en volume d'azote moléculaire et 50 % en volume à 0 % en volume d'un ou de plusieurs gaz nobles, **caractérisé en ce que** l'alliage est un alliage AlSc, l'alliage étant un alliage de la formule totale AlScWXYZ, où W est choisi parmi Li, Mg et Ca ou un mélange de ceux-ci, et X est choisi dans le groupe Zr, Ti, Nb, Ta, Hf et yttrium, et Y est choisi dans le groupe Be, Zn, Mn, Ag, Cu, Si, V, Ni, Co, Cr, Mo et Fe, et Z est choisi dans le groupe des éléments de terres rares, les constituants de l'alliage étant présents dans les proportions en pourcentage suivantes, par rapport au poids total de l'alliage :
- teneur en Sc 0,2 à 2 % en poids
- teneur en Mg 0,5 à 10 % en poids
- teneur en Li 0,2 à 3 % en poids
- teneur en Ca 0,2 à 2 % en poids
- teneur des éléments X : 0,05 à 1,5 % en poids
- teneur des éléments Y : 0,2 à 8 % en poids
- teneur des éléments de terres rares supplémentaires : 0,2 à 3 % en poids ou 0,25 à 3 fois la teneur en Sc, le reste étant Al et des impuretés inévitables.

2. Procédé selon la revendication 1, **caractérisé en ce que** le gaz d'atomisation contient 100 % en volume d'azote.

3. Procédé selon la revendication 1 ou 2, **caractérisé en ce que caractérisé en ce que** la poudre est fabriquée avec une taille de particule moyenne dans la plage allant de 5 µm à 100 µm, de préférence dans la plage allant de 25 µm à 65 µm.

4. Procédé selon l'une quelconque des revendications 1 à 3, **caractérisé en ce que** la masse fondue est maintenue à une température de 50 °C au-dessus de la température du liquidus de l'alliage d'aluminium dans l'unité d'atomisation.

5. Poudre en un alliage d'aluminium ayant une couche de surface passivée, pouvant être obtenue par le procédé selon la revendication 1.

6. Poudre selon la revendication 5, **caractérisée en ce qu'**elle est emballée dans un contenant fermé apte au transport dans l'atmosphère ambiante.

7. Utilisation de la poudre selon la revendication 5 ou 6 ou fabriquée selon l'une quelconque des revendications 1 à 3 dans un procédé de fabrication en couches (procédé ALM (Additive Layer Manufacturing)), choisi parmi un procédé à lit de poudre et/ou un procédé à buse de poudre pour la fabrication de composants.

8. Utilisation selon la revendication 7, selon laquelle, dans le cadre d'un procédé de fabrication en couches direct pour la fabrication de composants tridimensionnels, la poudre est fondue par fusion par rayonnement, la surface formée étant inactive ou passivée.

9. Utilisation selon la revendication 7, dans laquelle la poudre a été récupérée à partir d'un procédé de fabrication additive en couches réalisé auparavant.
